# EUROPEAN PATENT APPLICATION

(11) **EP 1 886 983 A1**
(43) Date of publication of application: **13.02.2008**
(21) Application number: 06118653.2
(22) Date of filing: 09.08.2006
(51) Int. Cl.: C06B 25/18, C06B 45/10, C08B 5/02, C08B 5/04, C08L 1/18

(54) **Method for manufacture of microcrystalline nitrocellulose**

(71) Applicant: Nickel, Russell R., Columbus MT Montana 59019 (US); Walker, Ronald R., Columbus MT Montana 59019 (US)
(72) Inventor: Nickel, Russell R., Columbus, MT 59019 (US); Walker, Ronald R., Columbus, MT 59019 (US)
(74) Representative: Schmitz, Jean-Marie

(57) **Abstract**

A microcrystalline nitrocellulose composition for use in an energetic high-nitrogen fuel, which exhibits the plastic characteristics of colloided nitrocellulose, suitable for forming, molding, or compacting, and a method of manufacturing the same.

## Description

### BACKGROUND OF THE INVENTION

The present application relates generally to nitrocellulose, and in particular, to a method for manufacturing microcrystalline nitrocellulose to provide an energetic, high-nitrogen fuel which is compressible and has a high binding capability.

Nitrocellulose, also known as cellulose nitrate, pyroxylin, colloxylin, xyloidin, celloidin, and parlodion, is a fast burning, easily ignitable, high-nitrogen energetic material which has been used in such applications as explosives and as a gun and rocket propellant. Nitrocellulose burns cleanly with non-toxic combustion byproducts, such as nitrogen, carbon dioxide, and water vapor. In the fireworks industry, nitrocellulose is typically utilized as an energetic binder in a lacquer form, added to pyrotechnic compositions.

Nitrocellulose is manufactured from cellulose, which has the chemical formula C₆H₁₀O₅, and which is the principle structural component of cell walls in higher plants. An almost pure form of cellulose, known as alpha cellulose, occurs naturally in cotton fibers. The physical properties of cellulose are a result of an association of cellulose chains which form crystalline structures called microfibrils, typically having a diameter of 2-20nm, a length of between 100-40,000nm, and which contain about 2000 cellulose molecules. Within a plant cell, the orientation of microfibrils changes from layer to layer. Often, especially in very strong plant cell walls, the microfibrils are arranged screw-like about an axis of the cell, with changes in the turning angle from layer to layer.

Nitrocellulose is produced by the well known process of nitrating cellulose with a mixture of concentrated acids including nitric acid, which has the chemical formula HNO₃. During the resulting chemical process, the nitric acid converts the cellulose into cellulose nitrate, having the chemical formula of C₆H₉O₅(NO₂), C₆H₈O₅(NO₂)₂ or C₆H₇O₅(NO₂)₃ depending on the degree of nitration. Sulfuric acid generally is used in conjunction with the nitric acid during the nitrating process to prevent the water produced in the reaction from diluting the concentration of nitric acid.

As a product of cellulose, nitrocellulose retains the general physical properties of cellulose. The most problematic physical property of cellulose is it's low bulk density. Essentially, cellulose crystals are microscopic hollow fibrous tubes. The fibrous nature of cellulose results in a light, fluffy material which is not easily compressed. Nitro cellulose retains these characteristics, and to some degree, enhances the fibrous nature of the resulting product by stiffening and strengthening the cellulose fibers during the nitration.

Pyrotechnic and explosive compositions are typically fairly dense mixtures of crystalline salts for flame color, crystalline oxidizers, carbonaceous fuels, and powdered metals. The flame coloring agents are commonly metal salts of barium, strontium, iron, copper, boron, calcium, antimony, potassium, sodium, cadmium and lithium. The oxidizing agents may include at least one compound selected from a group consisting of ammonium perchlorate, alkali metal perchlorates, alkali metal chlorates, and alkali metal nitrates. Additional fuels may include carbon, titanium, titanium alloys, zirconium, zirconium alloys, iron, alloys of iron, magnesium, alloys of magnesium, aluminum and alloys of aluminum. These materials are easily solidified with binders, agglomerated, or compressed, to form pellets or granules. Most of the current pyrotechnic and explosives processing techniques rely upon the dense nature of these materials and the ability to form these materials into pellets by compression in a variety of presses.

Nitrocellulose is very difficult to consolidate in this manner due to a low bulk density of approximately 0.2 gm/cc. Typically, nitrocellulose is either fully dissolved with a solvent or partially colloided with a plasticizer. Colloided materials are manufactured by partially or fully dissolving the nitrocellulose and mechanically reforming it into desired shapes and densities. This process breaks down the fibrous nature of the nitrocellulose, allowing it to be formed, molded, and extruded into a variety of shapes. One of the most commonly utilized colloiding agents is nitroglycerince, such as is used in the conventional manufacture of smokeless gunpowder. However, the addition of solvents to nitrocellulose alters the basic chemistry of the nitrocellulose, and most of the commonly used plasticizing agents are unsuitable for use in pyrotechnics. While such alterations to increase the plasticity of the nitrocellulose may be suitable for the manufacture of smokeless gunpowder, they are not desirable for use in the pyrotechnics industry.

Accordingly it would be advantageous to develop a method for manufacturing a nitrocellulose product which exhibits the plastic characteristics of colloided nitrocellulose, suitable for forming, molding, or compacting, but which is not chemically altered.

### BRIEF SUMMARY OF THE INVENTION

Briefly stated, an embodiment of the present invention provides a chemically unaltered nitrocellulose product for use in an energetic high-nitrogen fuel, which exhibits the plastic characteristics of colloided nitrocellulose, and which is suitable for forming, molding, or compacting.

In an alternate embodiment of the present invention, microcrystalline cellulose produced from alpha cellulose, and consisting of aggregates of micro-crystals which many dislocations and slip planes capable of fracturing and realigning under compression, is then nitrated with nitric acid. The nitration processes converts the microcrystalline cellulose into microcrystalline cellulose nitrate, or microcrystalline nitrocellulose (MCNC) having the chemical formula of C₆H₉O₅(NO₂), C₆H₈O₅(NO₂)₂ or C₆H₇O₅(NO₂)₃ depending on the degree of nitration, while retaining the mechanical properties of the microcrystalline cellulose.

The foregoing and other objects, features, and advantages of the invention as well as presently preferred embodiments thereof will become more apparent from the reading of the following description in connection with the accompanying drawings.

### BRIEF DESCRIPTION OF THE SEVERAL VIEWS OF THE DRAWINGS

In the accompanying drawings which form part of the specification:
Figure 1 is a flow chart illustrating the steps of a method of the present invention; and
Figure 2 is a cross-sectional view of an exemplary caseless projectile cartridge of the present invention.

Corresponding reference numerals indicate corresponding parts throughout the several figures of the drawings.

### DESCRIPTION OF THE PREFERRED EMBODIMENT

The following detailed description illustrates the invention by way of example and not by way of limitation. The description clearly enables one skilled in the art to make and use the invention, describes several embodiments, adaptations, variations, alternatives, and uses of the invention, including what is presently believed to be the best mode of carrying out the invention.

Microcrystalline cellulose is basically cellulose, and is derived from high-quality wood pulp, and in particular, from special grades of alpha cellulose. In many ways, cellulose is an ideal excipient. A naturally occurring polymer, cellulose is comprised of glucose units connected by a 1-4 beta glycosidic bond. These linear cellulose chains are bundled together as microfibril spiraled together in the walls of a plant cell. Each microfibril exhibits a high degree of three-dimensional internal bonding resulting in a crystalline structure that is insoluble in water and resistant to reagents. There are, however, relatively weak segments of the microfibril with weaker internal bonding. These are called amorphous regions, but are more accurately called dislocations since microfibril contain single-phase structure.

Microcrystalline cellulose is a highly crystalline particulate cellulose consisting primarily of crystallite aggregates obtained by removing amorphous (fibrous cellulose) regions of a purified cellulose source material by hydrolytic degradation. Hydrolysis of cellulose to obtain microcrystalline cellulose can be accomplished using mineral acid, enzymes, or microorganisms, however, to obtain microcrystalline cellulose having a higher crystallinity, it is preferably to utilize a strong mineral acid such as hydrogen chloride. United States Patent No. 6,228,213 B1 to Hanna et al. herein incorporated by reference, discloses a process for making microcrystalline cellulose using acid hydrolysis. The acid hydrolysis process produces a microcrystalline cellulose of predominantly coarse particulate aggregates, typically having a mean size range of about 15 to 40 microns. Following hydrolysis, chemicals and impurities are removed from the cellulose through a water-washing step. This is followed by a spray drying where a slurry mixture is sprayed through hot air jets to evaporate the remaining water. Rapid drying of the purified cellulose produces aggregates of microcrystals with many dislocations and slip plans that can fracture and realign under compression.

The deformation of microcrystalline cellulose under compression is primarily plastic, so bonds formed under pressure in the microcrystalline cellulose remain formed after the pressure is released, making for a strong, dense product with no capping. Microcrystalline cellulose exhibits excellent properties and compacts well under minimum compression pressures. A high binding capability enable the production of pellets or tablets of microcrystalline cellulose which are extremely hard and mechanically stable. Additional characteristics of microcrystalline cellulose include low friability, inherent lubricity, high bulk density, and a high dilution potential. Fragments of microcrystalline cellulose readily bond together without the use of an adhesive, and can be mixed with other substances so as to hold an additive while self-bonding.

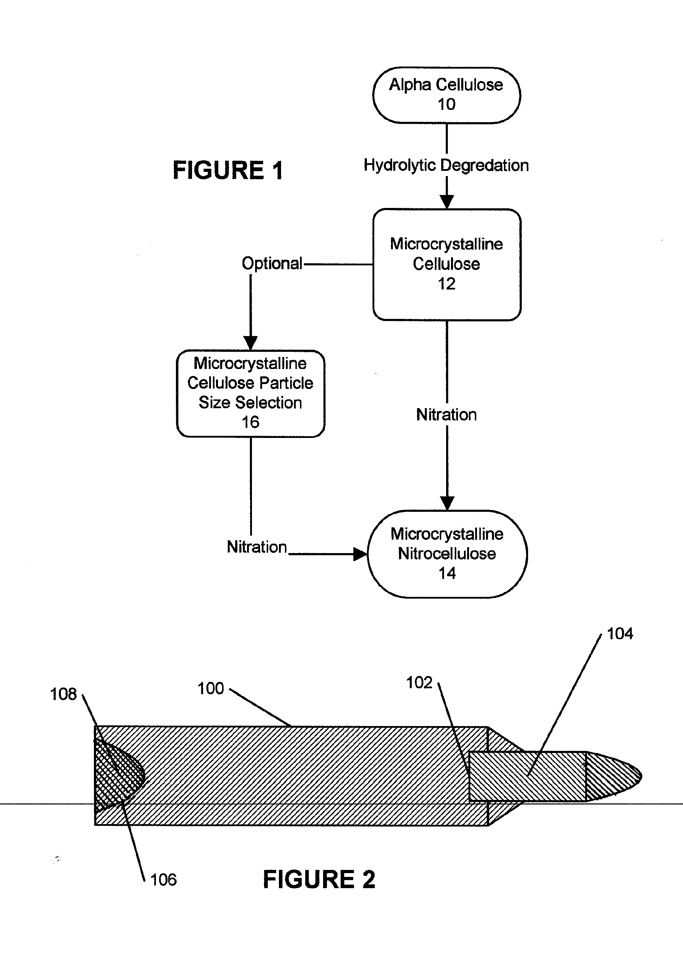

As shown in Figure 1, microcrystalline cellulose 12, produced from the degredation of alpha cellulose 10, and consisting of aggregates of micro-crystals which many dislocations and slip planes capable of fracturing and realigning under compression, is then nitrated with an acid mixture including at least nitric acid. The nitration processes converts the microcrystalline cellulose 12 into microcrystalline cellulose nitrate 14, or microcrystalline nitrocellulose (MCNC) having the chemical formula of C₆H₉O₅(NO₂), C₆H₈O₅(NO₂)₂, or C₆H₇O₅(NO₂)₃ depending on the degree of nitration, while retaining the mechanical properties of the microcrystalline cellulose.

Microcrystalline cellulose is commercially available in several particle sizes from a few microns in diameter up to several hundred microns from suppliers such as FMC Corporation. Preferably, 50, 100 and 200 micron microcrystalline cellulose is utilized to produce microcrystalline nitrocellulose. Microcrystalline cellulose having a particle size of less than 50 microns is more difficult to process into microcrystalline nitrocellulose because the resulting suspension is thick and more difficult to separate from the nitrating acids.

It has been observed that the effects of the nitrating acids on each particle of microcrystalline cellulose are greatest at the surface of the particles, and diminishes moving inward towards the core of each particle. Penetration of the nitration effect is believed to extend approximately 25 microns from the surface of each microcrystalline cellulose particle. Hence, microcrystalline cellulose particles of larger sizes exhibit lower nitrated cores (i.e., greater amounts of available carbon) following nitration, reducing the pressure exponent of microcrystalline nitrocellulose relative to that of nitrocellulose when burned. Selectively starting the nitration process with microcrystalline cellulose particles of specific sizes 16 provides an optional mechanism for regulating the percentage of nitrogen in the resulting microcrystalline nitrocellulose composition, along with the conventional nitrocellulose control mechanisms of acid mixture, soak duration, and temperature.

Following nitration of the microcrystalline cellulose, the resulting composition of microcrystalline nitrocellulose is an aggregate of micro-crystals with many dislocations and slip plans that can fracture and realign under compression. The deformation under compression is primarily plastic, so bonds formed under pressure in the microcrystalline nitrocellulose remain formed after the pressure is released, making for a strong, dense product with no capping.

Microcrystalline nitrocellulose exhibits excellent properties and compacts well under minimum compression pressures, resulting in an exceptionally strong compacted form which exhibits strength similar to that of the plastic Delrin (acetal). A high binding capability enable the production of pellets or tablets of microcrystalline nitrocellulose which are extremely hard and stable, and which can be machined in much the same manner as plastic, by mechanical cutting or adhesively joining using solvents commonly utilized to dissolve nitrocellulose.

Additional characteristics of microcrystalline nitrocellulose include low friability, inherent lubricity, high bulk density of approximate 0.58 gm/cc, and a high dilution potential. It has been observed that microcrystalline nitrocellulose exhibits a lower pressure exponent than nitrocellulose when burned under elevated pressures. Fragments of microcrystalline nitrocellulose readily bond together without the use of an adhesive, and can be mixed with other substances so as to hold an additive while self-bonding.

Microcrystalline nitrocellulose compositions provide an energetic, high-nitrogen fuel, suitable for use in explosives, pyrotechnics, and propellants. These high-nitrogen fuels preferably comprise between 10 to 98 percent microcrystalline nitrocellulose by weight. Flame coloring agents such as crystalline salts may be added in amounts ranging between 1 to 20 percent by weight. Crystalline oxidizing agents may be added in amounts ranging between 2 to 40 percent by weight, and carbonaceous or metallic fuels may be added in amounts ranging between 1 to 10 percent by weight.

As a propellant, microcrystalline nitrocellulose may be utilized in caseless ammunition, such as shown at 100 in Figure 2, to form the propellant and cartridge for a projectile. For example, a cylindrical block 100 of microcrystalline nitrocellulose may be formed with an axial depression 102 at one end for receiving a projectile 104, and an axial depression 106 at an opposite end for receiving primer material 108.

In view of the above, it will be seen that the several objects of the invention are achieved and other advantageous results are obtained. As various changes could be made in the above constructions without departing from the scope of the invention, for example, nitrating the microcrystalline cellulose in a process which does not utilize nitric acid, it is intended that all matter contained in the above description or shown in the accompanying drawings shall be interpreted as illustrative and not in a limiting sense.

## Claims

1. A composition comprising microcrystalline nitrocellulose.

2. The composition of claim 1 wherein said microcrystalline nitrocellulose is in pellet form.

3. The composition of Claim 1 wherein said microcrystalline nitrocellulose is compacted into a cylindrical form to axially receive a projectile at a first end, and to axially receive a primer means at a second end, said second end opposite said first end.

4. A high-nitrogen fuel comprising between 10 to 98 percent microcrystalline nitrocellulose by weight.

5. The high-nitrogen fuel of claim 4 further including at least one additive selected from a set of additives including crystalline salts, crystalline oxidizers, carbonaceous fuels, and powdered metals.

6. The high-nitrogen fuel of Claim 5 wherein said crystalline salts comprise between 2 to 20 percent of the high-nitrogen fuel by weight.

7. The high-nitrogen fuel of Claim 5 wherein said crystalline oxidizer comprises between 2 to 40 percent of the high-nitrogen fuel by weight.

8. The high-nitrogen fuel of Claim 5 wherein said carbonaceous fuel comprises between 1 to 10 percent of the high-nitrogen fuel by weight.

9. A process for producing microcrystalline nitrocellulose, comprising nitrating microcrystalline cellulose particles.

10. The process of claim 9 for producing microcrystalline nitrocellulose further including the step of producing said microcrystalline cellulose particles from the hydrolytic degradation of cellulose.

11. The process of claim 9 for producing microcrystalline nitrocellulose wherein said microcrystalline cellulose particles are nitrated with an acidic solution including at least nitric acid.

12. The process of claim 11 for producing microcrystalline nitrocellulose wherein said microcrystalline cellulose particles are nitrated with an acidic solution including at least sulfuric acid.

13. The process of claim 9 for producing microcrystalline nitrocellulose further including the step of compacting said nitrated microcrystalline cellulose into pellets.

14. The process of Claim 9 for producing microcrystalline nitrocellulose further including the step of regulating said nitration of said microcrystalline cellulose particles by selecting a size of said microcrystalline cellulose particles for nitration.

15. A process for producing a pyrotechnic composition, comprising:
nitrating microcrystalline cellulose to produce microcrystalline nitrocellulose; and
combining said microcrystalline nitrocellulose with at least one additive selected from a set of additives including crystalline salts, crystalline oxidizers, carbonaceous materials, and powdered metals.

16. The process of Claim 15 for producing a pyrotechnic composition further including the step of compacting said combination of microcrystalline nitrocellulose and said at least one additive into pellet form.
